# EUROPEAN PATENT SPECIFICATION

(11) **EP 2 551 935 B1**
(45) Date of publication and mention of the grant of the patent: **06.05.2015**
(21) Application number: 12162685.7
(22) Date of filing: 30.03.2012
(51) Int. Cl.: H01M 2/02, H01M 2/04, H01M 10/02

(54) **Rechargeable battery**
Wiederaufladbare Batterie
Batterie rechargeable

(30) Priority: 28.07.2011 US 201161512732 P; 23.11.2011 US 201113303893
(43) Date of publication of application: 30.01.2013
(73) Proprietor: Samsung SDI Co., Ltd., Yongin-si, Gyeonggi-do (KR)
(72) Inventor: Seong, Jae-Il, Gyeonggi-do (KR); Yoshio, Hideaki, Gyeonggi-do (KR); Lee, Kyung-Keun, Gyeonggi-do (KR); Kim, Jin-Wook, Gyeonggi-do (KR); Jeong, Ji-Wan, Gyeonggi-do (KR)
(74) Representative: Walaski, Jan Filip

(56) References cited:
- EP-A1- 2 133 933
- EP-A2- 2 166 594
- US-A1- 2006 216 590

## Description

The described technology relates generally to a rechargeable battery for inducing bending of a cap plate under compression.

A rechargeable battery can repeatedly perform charge and discharge, unlike a primary battery, and includes, for example, a nickel-hydrogen battery, a lithium battery, and a lithium ion battery, and is manufactured in a pack form to be widely used in a portable electronic device such as a mobile phone, a laptop computer, and a camcorder.

The rechargeable battery includes an electrode assembly that is spiral-wound in a jelly roll form by stacking a positive electrode and a negative electrode with a separator interposed therebetween, a case that houses the electrode assembly together with an electrolyte solution, and a cap plate that seals an upper opening of the case, and an electrode terminal installed in the cap plate and electrically connected to the electrode assembly.

For example, the case is formed to be a cylinder or a square made of aluminum or an aluminum alloy. When the case is compressed and changed by a pressure applied to the sides of the case in a perpendicular direction with respect to a top-down direction of the squared case, that is, in the side compression condition, the cap plate may not be bent or it can be bent at an unspecified point.

Accordingly, the case can be bent in a random direction or the positive electrode and the negative electrode can be short circuited inside the electrode assembly because of the problem of bending of the case. The internal short circuit of the rechargeable battery can cause the battery to catch fire or explode.

The described technology has been made in an effort to provide a rechargeable battery for preventing an internal short circuit of a cell by inducing bending of a cap plate in a predetermined direction under a side compression condition.

It has also been made in an effort to provide a rechargeable battery for preventing an internal short circuit of a cell by inducing bending or folding of a case in a predetermined direction under a side compression condition, and to prevent the battery from catching fire or exploding under the side compression condition.

According to the invention, there is provided a rechargeable battery comprising a case, an electrode assembly in the case and a cap plate closing the case, wherein the case comprises a first region A1 disposed in a centre portion of the case and second regions A2 on either side of the first region, wherein the radius of curvature of the internal curved surfaces connecting the bottom of the case to the front or rear walls of the case is greater in the second regions A2 than in the first region A1 of the case and the cap plate includes a groove formed on an inner surface of the cap plate for inducing bending of the cap plate in response to a compression force applied to sides of the case, the groove disposed in an area of the cap plate that corresponds to the position of an interface between the first and second regions A1, A2.

The first region A1 may be symmetrically disposed about the centre of the case.

A thickness of the curved portions connecting the bottom to the front and rear walls may be greater in the second regions A2 than in the first region A1 of the case.

The bottom may have a first thickness (t1) that is greater than a second thickness (t2) of the front or rear walls wherein third and fourth thicknesses (t3, t4) of the curved portions in the first and second regions of the case are gradually reduced from the bottom towards the front or rear walls.

The radius of curvature of the internal curved surfaces connecting the bottom of the case to the front and rear walls may be gradually reduced towards a centre portion of the case.

The cap plate may include a terminal hole and an electrolyte injection opening and the groove may be between the terminal hole and the electrolyte injection opening.

The groove may be longer than the diameter of the terminal hole.

The groove may not extend to the edges of the cap plate, or may extend across the whole width of the cap plate.

The groove may define a joining portion that joins portions of the cap plate on either side of the groove, the joining portion protruding from the top surface of the cap plate, the thickness tb of the joining portion being less than the thickness ta of the cap plate.

The groove may be disposed at an angle with respect to the short axis of the cap plate. The groove may be bent along its length.

The bent groove may form a V-shape, the apex of the V-shape pointing towards or away from a terminal hole in the cap plate.

The rechargeable battery may comprise a plurality of grooves for inducing bending of the cap plate.

The rechargeable battery may comprise first and second grooves symmetrically disposed on either side of a terminal hole in the cap plate, the first and second grooves being disposed to respectively correspond to first and second interfaces between the first region A1 and the second regions A2 on either side.

Embodiments of the invention will now be described by way of example with reference to the accompanying drawings, in which:
FIG. 1 shows an exploded perspective view of a rechargeable battery according to a first exemplary embodiment.
FIG. 2 shows a cross-sectional view with respect to a line II - II when a rechargeable battery of FIG. 1 is combined.
FIG. 3A shows a top plan view of a cap plate applicable to a rechargeable battery of FIG. 1.
FIG. 3B shows a cross-sectional view with respect to a line IIIb- IIIb of FIG. 3A.
FIG. 3C shows a perspective view of a rechargeable battery according to a first exemplary embodiment under a side compression condition.
FIG. 4A shows a top plan view of a cap plate applicable to a rechargeable battery according to a second exemplary embodiment.
FIG. 4B shows a perspective view of a rechargeable battery according to a second exemplary embodiment under a side compression condition.
FIG. 5 to FIG. 12 show top plan views of a cap plate applicable to a rechargeable battery according to third to tenth exemplary embodiments.
FIG. 13 shows a front view of a rechargeable battery according to an eleventh exemplary embodiment.
FIG. 14 shows a cross-sectional view with respect to a line XIV - XIV of FIG. 13.
FIG. 15 shows a cross-sectional view of a case with respect to a line XV - XV of FIG. 13.
FIG. 16 shows a cross-sectional view with respect to a line XVI - XVI of FIG. 15.
FIG. 17 shows a cross-sectional view with respect to a line XVII - XVII of FIG. 15.
FIG. 18 shows a cross-sectional view of a case applicable to a rechargeable battery according to a twelfth exemplary embodiment.

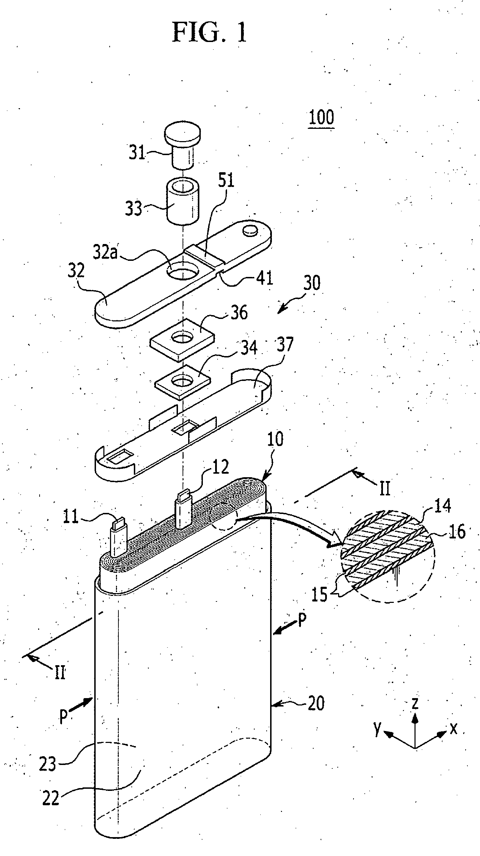

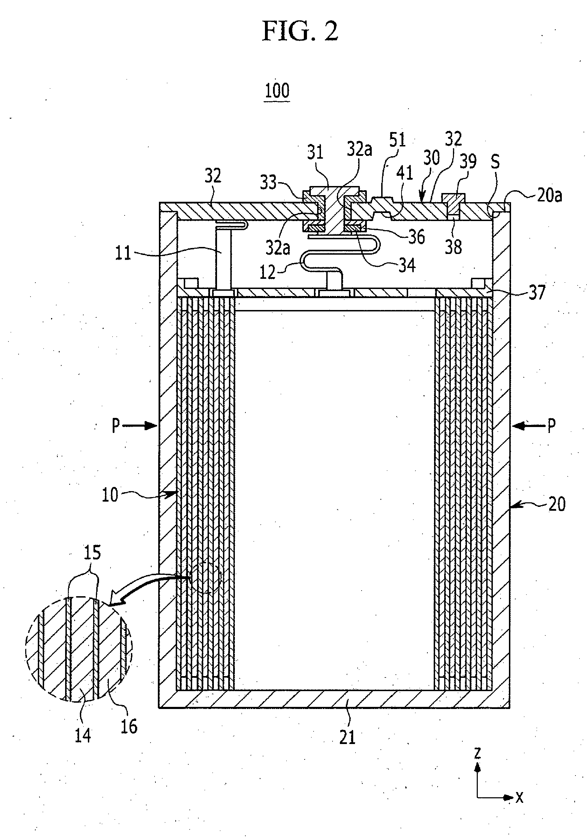

Referring to FIG. 1 and FIG. 2, the rechargeable battery 100 includes an electrode assembly 10 for charging and discharging the current, a case 20 for receiving the electrode assembly 10 together with the electrolyte solution, and a cap assembly 30 for sealing an upper opening of the case 20.

The electrode assembly 10 is formed by stacking a positive electrode 14 and a negative electrode 16 and spiral-winding the same in a jelly-roll form with a separator 15, an electrical insulator, therebetween. The electrode assembly 10 includes a form that corresponds to an inner space of the squared case 20 so that it may be inserted into the case 20.

The case 20 receives the electrode assembly 10 through an opening formed on one side, and is formed with a conductor so that it may function as an electrode terminal. For example, the case 20 is made of aluminum or an aluminum alloy, and is electrically connected to the positive electrode 14 of the electrode assembly 10 to work as a positive electrode terminal.

In this instance, the electrode terminal 31 installed in the cap assembly 30 is electrically connected to the negative electrode 16 of the electrode assembly 10 to function as a negative electrode terminal. On the contrary, the case 20 may work as a negative electrode terminal and the electrode terminal 31 may function as a positive electrode terminal.

The cap assembly 30 includes a cap plate 32 fixed to the opening of the case 20, an electrode terminal 31 including an insulating gasket 33 and inserted into a terminal hole 32a of the cap plate 32, a terminal plate 34 electrically connected to the electrode terminal 31, an insulating plate 36 provided between the cap plate 32 and the terminal plate 34, an insulating case 37 provided between the electrode assembly 10 and the cap assembly 30, and a sealing cap 39 installed in an electrolyte injection opening 38 of the cap plate 32.

The insulating gasket 33 electrically insulates the electrode terminal 31 and the cap plate 32 and seals a gap between them. The insulating plate 36 electrically insulates the terminal plate 34 and the cap plate 32 and seals a gap between them. The insulating case 37 electrically insulates the electrode assembly 10 and the cap assembly 30.

The electrolyte injection opening 38 combines the cap plate 32 and the case 20 to allow the electrolyte solution to be injected into the case 20. When the electrolyte solution is injected, the electrolyte injection opening 38 is sealed with a sealing cap 39.

A positive electrode lead 11 fixed to the positive electrode 14 of the electrode assembly 10 is welded inside the cap plate 32 to transmit the current of the positive electrode 14 to the cap plate 32 and the case 20. That is, the case 20 functions as a positive electrode terminal. That is, the insulating case 37 insulates the negative electrode 16 of the electrode assembly 10 and the cap plate 32 with positive polarity.

A negative electrode lead 12 fixed to the negative electrode 16 of the electrode assembly 10 is welded on the bottom of the terminal plate 34 to transmit the current of the negative electrode 16 to the terminal plate 34 and the electrode terminal 31. That is, the electrode terminal 31 functions as a negative electrode terminal.

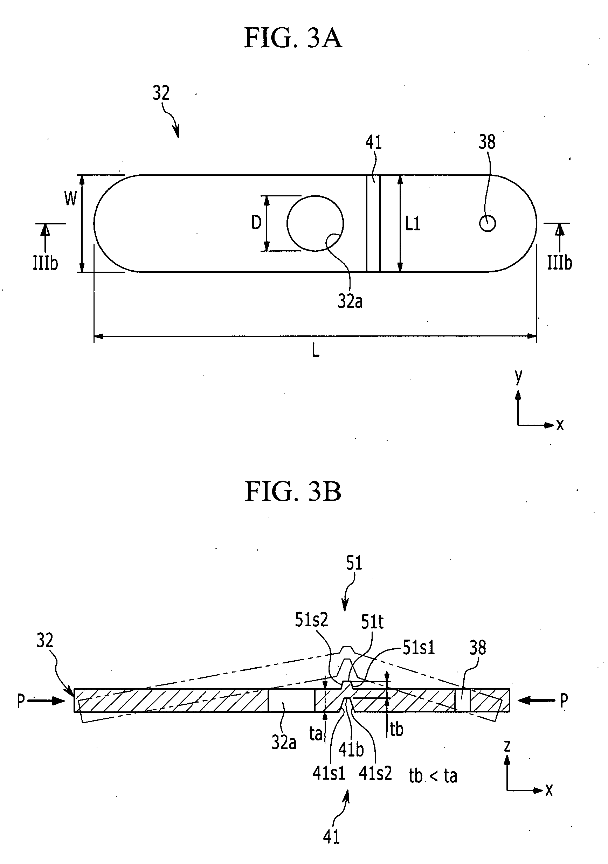

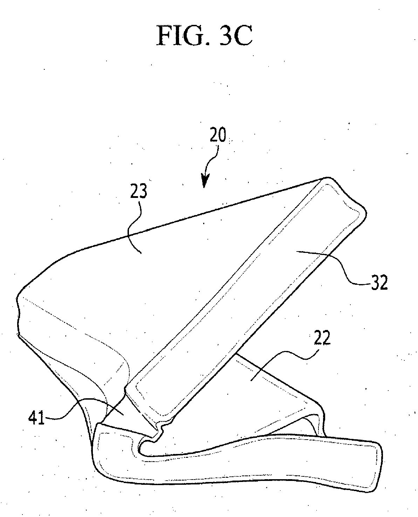

FIG. 3A shows a top plan view of a cap plate 32 applicable to a rechargeable battery 100 of FIG. 1, FIG. 3B shows a cross-sectional view with respect to a line IIIb - IIIb of FIG. 3A, and FIG. 3C shows a perspective view of a rechargeable battery 100 according to a first exemplary embodiment under a side compression condition.

Referring to FIG. 3A to FIG. 3C, the cap plate 32 includes a straight bending inducing groove 41 in a direction (i.e., a y-axis direction) crossing the direction (i.e., x-axis direction) of the side compression (P) under the side compression condition from the outside of the terminal hole 32a. The bending inducing groove 41 is arranged on a bottom side of the cap plate 32 so that the groove 41 faces the electrode assembly 10 and the corresponding protrusion 51 is on the top side of cap plate 32 and faces away from electrode assembly 10. The bending inducing groove 41 induces bending of the cap plate 32 under the side compression condition. In the first exemplary embodiment, the bending inducing groove 41 is formed between the terminal hole 32a and the electrolyte injection opening 38.

Referring to FIG. 1 and FIG. 2, the side compression (P) works on the sides of the cap plate 32 and the case 20 to bend or fold the case 20 toward the front surface 22 or the back surface 23. For convenience, in FIG. 3C, the case 20 is folded with the front surface 22 as the inside and the back surface 23 as the outside. In this instance, the bending inducing groove 41 formed in the cap plate 32 fluidly induces bending of the cap plate 32 following the transformation of the case 20 to thus prevent hindrance of bending or folding of the case 20 caused by bad bending of the cap plate 32. In FIG. 3C, the bending inducing groove 41 is separated to allow the cap plate 32 to be easily bent and the case 20 to be easily folded.

Referring to FIG. 3A and FIG. 3B, the terminal hole 32a is formed in the centre of the length (L) direction (set in the x-axis direction) of the cap plate 32 with a diameter (D) corresponding to the insulating gasket 33. The bending inducing groove 41 is formed near the terminal hole 32a. In the side compression (P) condition, the case 20 is bent or folded in the centre of the width direction (i.e., the x-axis direction) so the bending inducing groove 41 is formed near the terminal hole 32a so that it may be provided near the centre of the cap plate 32 within the range of not intercepting installation of the electrode terminal 31 in the terminal hole 32a of the cap plate 32.

The bending inducing groove 41 generates weak or low mechanical strength for the side compression (P) condition in the cap plate 32, and it is formed with a thickness (tb) that is less than the thickness (ta) of the terminal hole 32a in the cap plate 32 (refer to FIG. 3B). Therefore, the cap plate 32 can be bent in the bending inducing groove 41 under the side compression (P) condition.

Also, the bending inducing groove 41 is formed near the terminal hole 32a to have mechanical strength that is weaker than that of the terminal hole 32a so it is formed with a length L1 that is greater than the diameter (D) of the terminal hole 32a in the width (W) direction (i.e., the y-axis direction) of the cap plate 32 (refer to FIG. 3A.) Therefore, the cap plate 32 can be bent in the bending inducing groove 41 under the side compression (P) condition.

As illustrated in FIG. 3B, by having the bending inducing groove 41 on a bottom side of the cap plate 32 and facing the electrode assembly 10, the electrode assembly 10 is less apt to be damaged upon application of a compression (P) to the case 20 of the battery 100. This is because the groove 41 on the bottom side of the cap plate 32 causes the cap plate to bulge upwards and away from the electrode assembly 10 upon application of a compression (P), thereby preventing the cap plate 32 from contacting or interfering with the electrode assembly 10. In modern rechargeable batteries having increased capacity in a smaller space, the distance between the cap plate 32 and the electrode assembly 10 can be very minute. If the battery is compressed by a compression (P), because of this very small distance between the electrode assembly 10 and the cap plate 32, the electrode assembly is apt to be damaged because it can be pierced by the cap plate 32. Consequently, by including such a groove 41 in the bottom surface of cap plate 32, the electrode assembly 10 is protected from being shorted by the cap plate 32 upon an application of a compression (P) because the groove 41 in the bottom surface of the cap plate causes the cap plate 32 to bend in a direction away from the electrode assembly 10, leaving the electrode assembly 10 undamaged.

As illustrated in FIG. 3B, the groove 41 may have a bottom surface 41b and opposing side surfaces 41s1 and 41s2. Because side 41s1 is spaced-apart from opposing surface 41s2, and because the groove 41 is arranged on a bottom side of cap plate 32, a compression (P) on battery 100 and on cap plate 32 causes the cap plate 32 to bulge upwards and away from the electrode assembly 10.

On a top surface of the cap plate is a protrusion 51 that corresponds to the groove 41. Protrusion or ridge 51 may have side surfaces 51s1 and 51s2 and a top surface 51t. It may be possible to produce the groove 41/protrusion 51 arrangement in cap plate 31 by a pressing process.

In FIG. 3A, the length L1 of the bending inducing groove 41 is the same size as the width (W) of the cap plate 32. That is, the bending inducing groove 41 is formed over the entire width (W) of the cap plate 32 so bending of the cap plate 32 can be induced over the width (W) under the side compression (P) condition.

Accordingly, when the case 20 is bent or folded by the side compression (P), bending of the cap plate 32 is induced in the direction in which the bending inducing groove 41 is set so the internal short circuit of the cell is prevented. That is, the internal short circuit of the cell that may occur when the cap plate 32 is not bent or it is bent in a random direction due to bending resistance is prevented under the side compression (P) condition. Therefore, the cell's burning and explosion is prevented.

Various exemplary embodiments will now be described. In this instance, the same configuration as the first exemplary embodiment will be omitted and different configurations will be described through comparison.

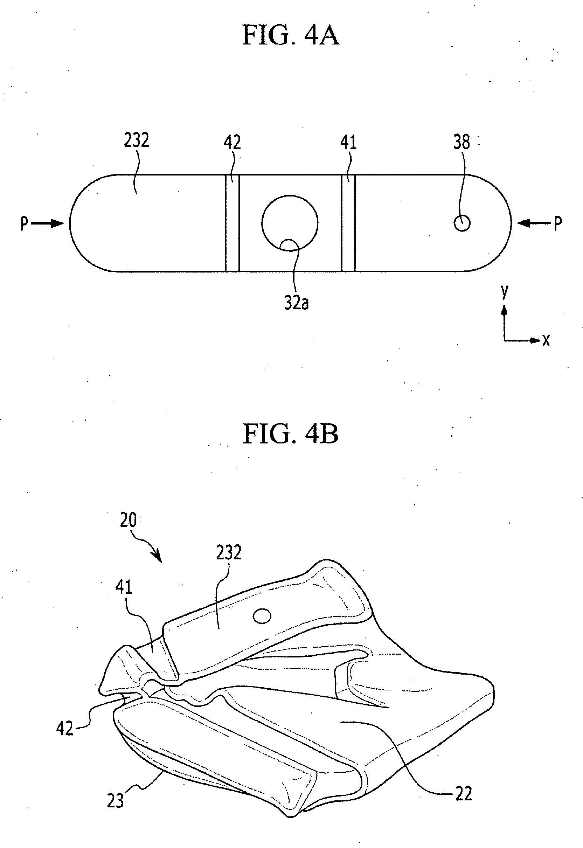

FIG. 4A shows a top plan view of a cap plate applicable to a rechargeable battery according to a second exemplary embodiment, and FIG. 4B shows a perspective view of a rechargeable battery according to a second exemplary embodiment under a side compression condition.

Referring to FIG. 4A and FIG. 4B, the second exemplary embodiment will now be described. In the first exemplary embodiment, the cap plate 32 includes a bending inducing groove 41 on one side of the terminal hole 32a. In the second exemplary embodiment, the cap plate 232 includes bending inducing grooves 41 and 42 on both sides of the terminal hole 32a. In the second exemplary embodiment, one bending inducing groove 41 is formed between the terminal hole 32a and the electrolyte injection opening 38 and another bending inducing groove 42 is formed on the opposite side with the terminal hole 32a therebetween.

In the second exemplary embodiment, the cap plate 232 includes bending inducing grooves 41 and 42 on both sides of the terminal hole 32a in a symmetric manner, so it can induce bending of the cap plate 232 on one or both sides of the terminal hole 32a under the side compression (P) condition. That is, the internal short circuit of the cell is more efficiently prevented under the side compression (P) condition.

For convenience, in FIG. 4B, the bending inducing grooves 41 and 42 induce bending of the cap plate 32 on both sides of the terminal hole 32a. In this instance, the case 20 is bent with the front surface 22 as the inside and the back surface 23 as the outside.

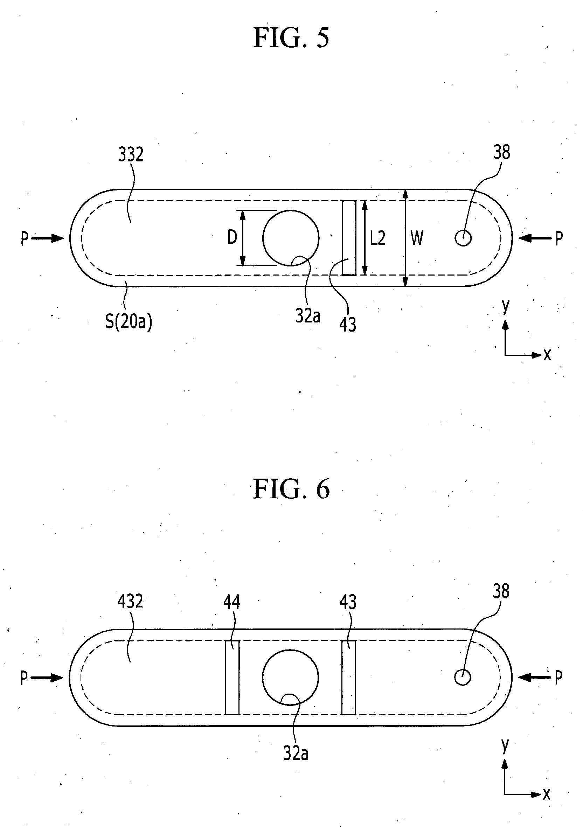

FIG. 5 to FIG. 12 show top plan views of a cap plate applicable to a rechargeable battery according to third to tenth exemplary embodiments.

Referring to FIG. 5, the third exemplary embodiment will now be described. In the first exemplary embodiment, the cap plate 32 includes the bending inducing groove 41 over the entire width direction (i.e., the y-axis direction) of the cap plate 32. In the third exemplary embodiment, the cap plate 332 includes a bending inducing groove 43 on a part of the width (W) that is set in the width direction (i.e., the y-axis direction) of the cap plate 332.

In the third exemplary embodiment, the cap plate 332 includes the bending inducing groove 43 on one side of the terminal hole 32a with a length L2 that is smaller than the width (W) of the cap plate 332, and it induces bending of the cap plate 332 on one side of the terminal hole 32a under the side compression (P) condition. For this purpose, the bending inducing groove 43 formed on a part of the width (W) of the cap plate 332 is set with the length L2 that is greater than the diameter (D) of the terminal hole 32a, covering the centre of the width direction (i.e., the y-axis direction).

The bending inducing groove 43 is formed without facing a corresponding surface (S) of the cap plate 332 attached to the opening of the case 20 when the cap plate 332 is installed in the opening of the case 20 (refer to FIG. 2). Therefore, the bending inducing groove 43 prevents interference that may occur between the opening of the case 20 and the corresponding surface (S) of the cap plate 332 such that it is easy to weld them.

Referring to FIG. 6, the fourth exemplary embodiment will now be described. In the third exemplary embodiment, the cap plate 332 includes the bending inducing groove 43 on one side of the terminal hole 32a. In the fourth exemplary embodiment, the cap plate 432 includes bending inducing grooves 43 and 44 on both sides of the terminal hole 32a.

In the fourth exemplary embodiment, the cap plate 432 includes the bending inducing grooves 43 and 44 on both sides of the terminal hole 32a in a symmetric manner so it induces bending of the cap plate 432 on one or both sides of the terminal hole 32a under the side compression (P) condition. That is, the bending inducing grooves 43 and 44 can more efficiently prevent the internal short circuit of the cell under the side compression (P) condition.

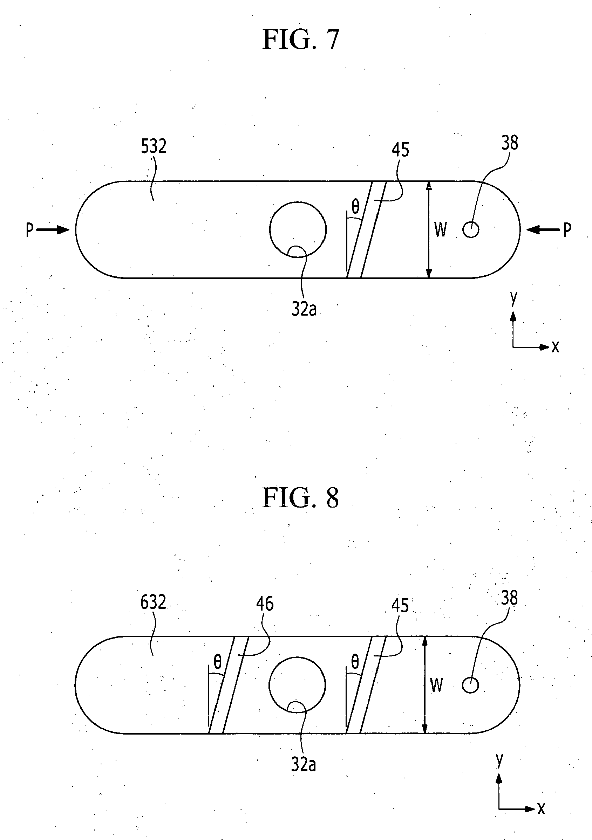

Referring to FIG. 7, the fifth exemplary embodiment will now be described. In the first exemplary embodiment, the cap plate 32 includes a bending inducing groove 41 in the width (W) direction (i.e., the y-axis direction) on one side of the terminal hole 32a. In the fifth exemplary embodiment, the cap plate 532 includes a bending inducing groove 45 so that it may have an inclination angle (θ) with respect to the width (W) direction (i.e., the y-axis direction) on one side of the terminal hole 32a. In the fifth exemplary embodiment, the cap plate 532 includes the bending inducing groove 45 so that it may have an inclination angle (θ) with respect to the width direction (i.e., the y-axis direction) on one side of the terminal hole 32a, and it can induce bending of the cap plate 532 in the direction of the inclination angle (θ) on one side of the terminal hole 32a under the side compression (P) condition. The bending inducing groove 45 can efficiently induce bending of the cap plate 532 when the side compression (P) is digressed from the x-axis direction by some degree.

Referring to FIG. 8, the sixth exemplary embodiment will now be described. In the fifth exemplary embodiment, the cap plate 532 includes a bending inducing groove 45 on one side of the terminal hole 32a. In the sixth exemplary embodiment, the cap plate 632 includes the bending inducing grooves 45 and 46 on both sides of the terminal hole 32a.

In the sixth exemplary embodiment, the cap plate 632 includes bending inducing grooves 45 and 46 on both sides of the terminal hole 32a in a symmetric manner with the inclination angle (θ) so it can induce bending of the cap plate 632 in the direction of the inclination angle (θ) on both or one side of the terminal hole 32a under the side compression (P) condition. The bending inducing grooves 45 and 46 can efficiently induce bending of the cap plate 632 on both sides of the terminal hole 32a when the side compression (P) is digressed from the x-axis direction by some degree.

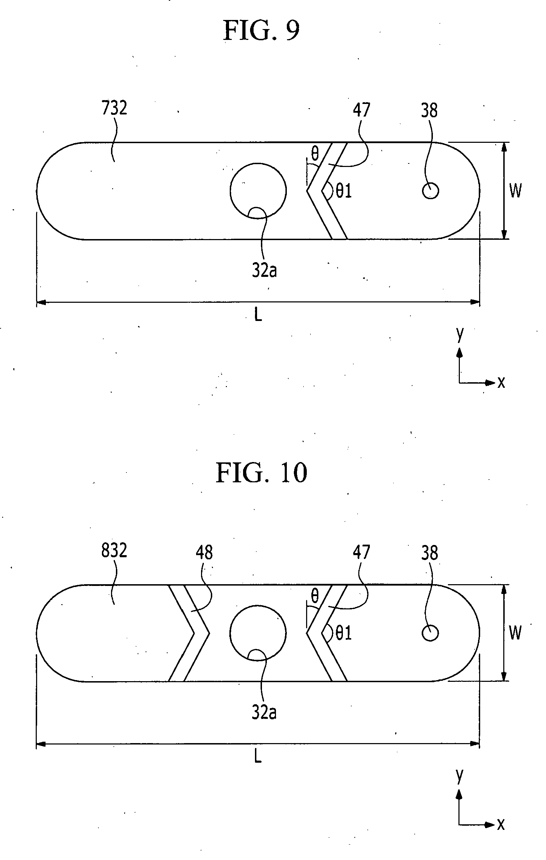

Referring to FIG. 9, the seventh exemplary embodiment will now be described. In the fifth exemplary embodiment, the cap plate 532 includes the bending inducing groove 45 as a straight line with an inclination angle (θ) with respect to the width (W) direction (i.e., the y-axis direction). In the seventh exemplary embodiment, the cap plate 732 includes a bending inducing groove 47 as a symmetric bent line with an inclination angle (θ) and a bend angle (θ1) with respect to the width direction (i.e., the y-axis direction).

In the seventh exemplary embodiment, the cap plate 732 includes the bending inducing groove 47 as a bent line with an inclination angle (θ) and a bend angle (θ1) on one side of the terminal hole 32a so it can induce bending of the cap plate 632 in the bent line direction on one side of the terminal hole 32a under the side compression (P) condition.

The bending inducing groove 47 can induce various bends of the cap plate 732 by the bend angle (θ1) with respect to the length (L) direction (i.e., the x-axis direction) and the width (W) direction (i.e., the y-axis direction) under the side compression (P) condition.

Referring to FIG. 10, the eighth exemplary embodiment will now be described. In the seventh exemplary embodiment, the cap plate 732 includes the bending inducing groove 47 on one side of the terminal hole 32a. In the eighth exemplary embodiment, the cap plate 832 includes the bending inducing grooves 47 and 48 on both sides of the terminal hole 32a.

In the eighth exemplary embodiment, the cap plate 832 includes the bending inducing grooves 47 and 48 as bent lines with an inclination angle (θ) and a bend angle (θ1) on both sides of the terminal hole 32a, and can induce bending of the cap plate 832 in the bent line direction on both or one side of the terminal hole 32a under the side compression (P) condition.

The bending inducing grooves 47 and 48 can induce various types of bending of the cap plate 832 in the length (L) direction (i.e., the x-axis direction) and the width (W) direction (i.e., the y-axis direction) by the bend angle (θ1) on both sides of the terminal hole 32a under the side compression (P) condition.

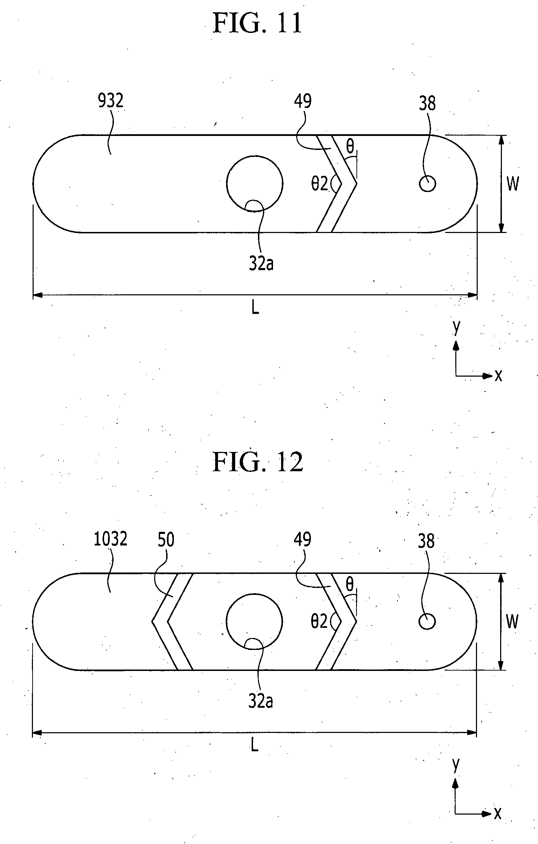

Referring to FIG. 11, the ninth exemplary embodiment will now be described. In the seventh exemplary embodiment, the cap plate 732 has the bent line with the protruding direction of the bending inducing groove 47 toward the terminal hole 32a. In the ninth exemplary embodiment, the cap plate 932 has a bent line with the protruding direction of the bending inducing groove 49 toward the opposite side of the terminal hole 32a. That is, the bending inducing groove 49 is formed in a state in which the bent line receives the terminal hole 32a.

In the ninth exemplary embodiment, the cap plate 932 includes the bending inducing groove 49 as a bent line with an inclination angle (θ) and a bend angle (θ2) on one side of the terminal hole 32a, and can induce bending of the cap plate 932 in the bent line direction on one side of the terminal hole 32a under the side compression (P) condition.

The bending inducing groove 49 can induce various kinds of bending of the cap plate 932 by the bend angle (θ2) in the length (L) direction (i.e., the x-axis direction) and the width (W) direction (i.e., the y-axis direction) under the side compression (P) condition.

In the seventh exemplary embodiment, the bending inducing groove 47 has the protruding direction that is formed with the inclination angle (θ) and the bend angle (θ1) toward the terminal hole 32a. Therefore, in the seventh exemplary embodiment, the bending inducing groove 47 can induce convex bending of an adjacent side of the terminal hole 32a by the bend angle (θ1) in the width direction (i.e., the y-axis direction) of the cap plate 732.

In the ninth exemplary embodiment, the bending inducing groove 49 is formed in the protruding direction that is formed with an inclination angle (θ) and a bend angle (θ2) on the opposite side of the terminal hole 32a. Therefore, in the ninth exemplary embodiment, the bending inducing groove 49 can induce convex bending of a remote side of the terminal hole 32a by the bend angle (θ2) with respect to the width direction (i.e., the y-axis direction) of the cap plate 932.

Referring to FIG. 12, the tenth exemplary embodiment will now be described. In the ninth exemplary embodiment, the cap plate 932 includes the bending inducing groove 49 on one side of the terminal hole 32a. In the tenth exemplary embodiment, the cap plate 1032 includes bending inducing grooves 49 and 50 on both sides of the terminal hole 32a.

In the tenth exemplary embodiment, the cap plate 1032 includes the bending inducing grooves 49 and 50 as bent lines with an inclination angle (θ) and a bend angle (θ2) on both sides of the terminal hole 32a, and can induce bending of the cap plate 1032 in the bent line direction on both or one side of the terminal hole 32a under the side compression (P) condition.

The bending inducing grooves 49 and 50 can induce various sorts of bendings of the cap plate 1032 in the length (L) direction (i.e., the x-axis direction) and the width (W) direction (i.e., the y-axis direction) by the bend angle (θ) on both sides of the terminal hole 32a under the side compression (P) condition.

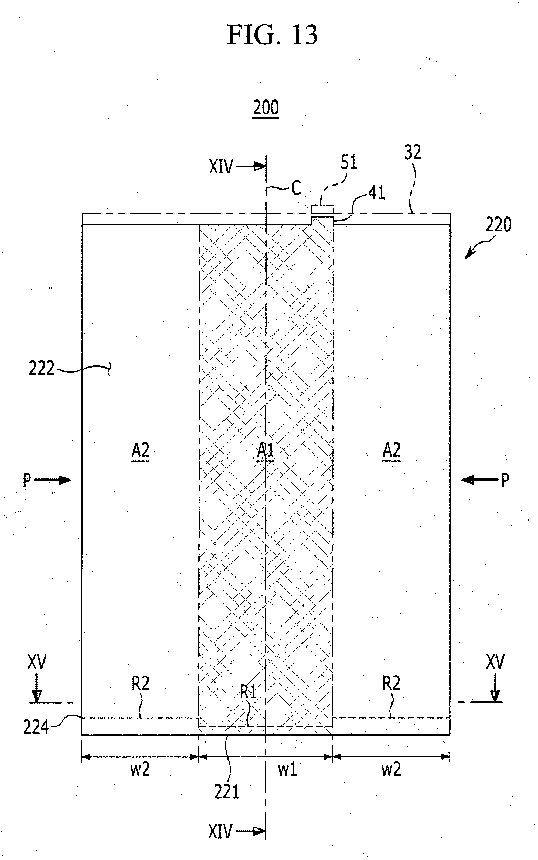

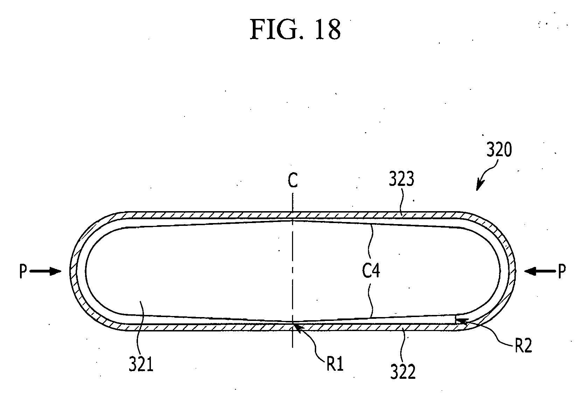

In addition, the first to tenth exemplary embodiments are applicable to cases 220 and 320 according to eleventh and twelfth exemplary embodiments (refer to FIG. 13 and FIG. 18). For convenience, the cap plate 32 according to the first exemplary embodiment will be applied to the eleventh exemplary embodiment and the twelfth exemplary embodiment.

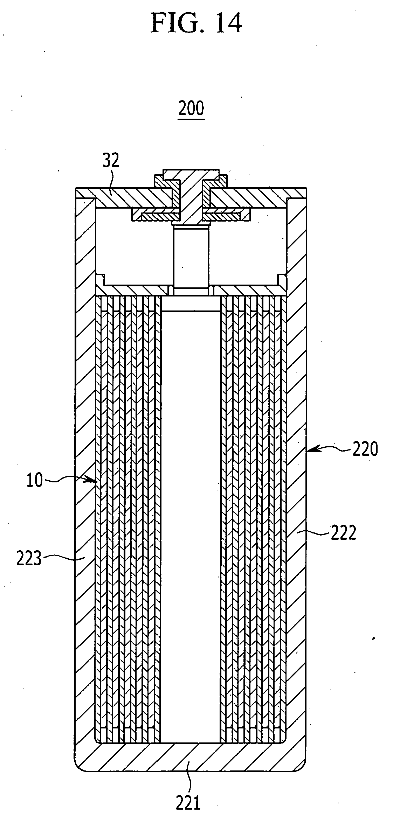

FIG. 13 shows a front view of a rechargeable battery 200 according to an eleventh exemplary embodiment, and FIG. 14 shows a cross-sectional view with respect to a line XIV-XIV of FIG. 13.

Referring to FIG. 13 and FIG. 14, the case 220 is formed to be a shape of a rectangle including an opening, a bottom surface 221 provided on the opposite side of the opening, a front surface 222 for surrounding a front part between the opening and the bottom surface 221, and a back surface 223 for surrounding a back part, and joint portions 224 joining the bottom surface 221 to each of the front and back side surfaces 222 and 223 respectively, the case 220 providing a receiving space for the electrode assembly 10.

The case 220 according to the eleventh exemplary embodiment is formed to have safety of not damaging the electrode assembly 10 in the side compression condition. In FIG. 13, the direction of the side compression (P) is applied to the right and left sides of the case 220.

For example, the case 220 is formed by deep drawing or pressing, and it is formed by connecting the bottom surface 221 and the front surface 222 with a curved surface and connecting the bottom surface 221 and the back surface 223 with a curved surface.

The case 20 according to the eleventh exemplary embodiment is formed to induce the bent or folded position of the case 220 to a predetermined point in order to prevent the internal short circuit of the electrode assembly 10 under the side compression condition (P).

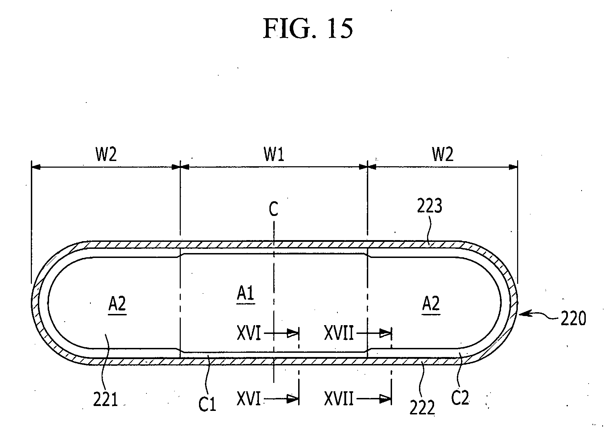

FIG. 15 shows a cross-sectional view of a case with respect to a line XV - XV of FIG. 13. Referring to FIG. 13 and FIG. 15, the case 220 is set to have different mechanical strengths for the side compression condition (P), in other words to have structures that. That is, the case 220 includes a first area A1 with a low mechanical strength for the side compression condition (P) and a second area A2 with a relatively higher mechanical strength than the first area A1.

The first area A1 has a first width W1 with respect to the centre line (C) of the case 220. The second area A2 has second widths W2 and W2 set on both sides of the first area A1. That is, the first area A1 or the first and second areas A1 and A2 are symmetric with respect to the centre line (C) in the case 20. In this instance, the bending inducing groove 41 of the cap plate 32 is disposed corresponding to the first area A1.

For example, the case 220 differently sets curvatures of the curved surfaces that connect the bottom surface 221 and the front surface 222 and also the bottom surface 21 and the back surface 223 according to the first and second areas A1 and A2, and differently sets a thickness of the curved surface according to the first and second areas A1 and A2.

The curvature of the curved surface connecting the bottom surface 221 and the front surface 222 and the curvature of the curved surface connecting the bottom surface 221 and the back surface 223 are the same, so the curvature radius and comparison of thickness will be described by exemplifying the curved surface that connects the bottom surface 221 and the front surface 222. The curved surface connecting the bottom surface 221 and the back surface 223 will not be described.

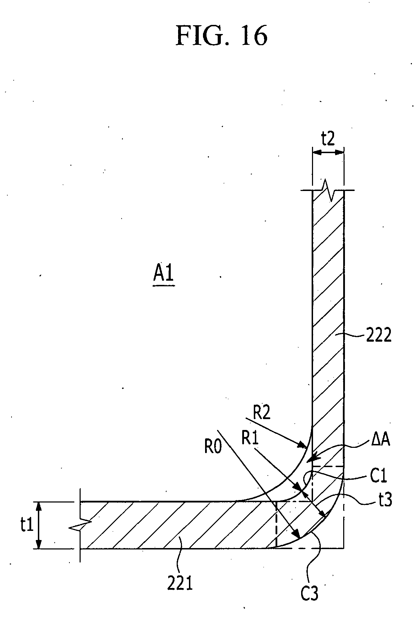

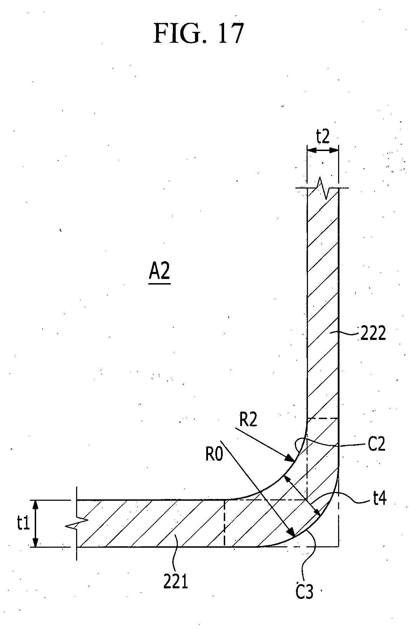

FIG. 16 shows a cross-sectional view with respect to a line XVI - XVI of FIG. 15, and FIG. 17 shows a cross-sectional view with respect to a line XVII - XVII of FIG. 15. Referring to FIG. 16 and FIG. 17, regarding the case 220, a first thickness t1 of the bottom surface 221 is formed to be greater than a second thickness (t2) of the front surface 222 (i.e., t1>t2) (where the thickness of the back surface is the same as the thickness of the front surface.).

Therefore, the case 220 having mechanical strength can induce bending or folding depending on the mechanical strength of the front surface 222 and the back surface 223 without being influenced by the mechanical strength of the bottom surface 221 under the side compression condition. That is, the case 220 can induce bending in the first area A1 that is weak compared to the second area A2. For example, the first thickness t1 of the bottom surface 221 is 0.4mm and the second thickness t2 of the front surface 222 is 0.25mm.

Referring to FIG. 13 and FIG. 15 to FIG. 17, the curved surface C1 connecting the bottom surface 221 and the front surface 222 in the first area A1 has a first curvature radius R1, and the curved surface C2 connecting the bottom surface 221 and the front surface 222 in the second area A2 has a second curvature radius R2. The first curvature radius R1 of the first area A1 is set to be smaller than the second curvature radius R2 of the second area A2.

The first and second curvature radii R1 and R2 represent internal curvature radii of the curved surfaces C1 and C2 in the first and second areas A1 and A2. The external curvature radius R0 of the curved surface C3 connecting the bottom surface 221 and the front surface 222 is the same in the first and second areas A1 and A2.

Therefore, the curved surfaces C1 and C2 connecting the bottom surface 221 and the front surface 222 form a third thickness t3 with the first curvature radius R1 in the first area A1, and form a fourth thickness t4 with the second curvature radius R2 in the second area A2.

The third and fourth thicknesses t3 and t4 are set to be between the first thickness t1 and the second thickness t2, and are gradually reduced toward the front surface 222 from the bottom surface 221. For convenience, in FIG. 16 and FIG. 17, the third and fourth thicknesses t3 and t4 are shown at random positions in the curved surfaces C1 and C2.

Referring to FIG. 16, the curved surfaces C1 and C2 connecting the bottom surface 221 and the front surface 222 have a cross-section difference (ΔA) in the first and second areas A1 and A2. That is, the second area A2 has greater mechanical strength than the first area A1 by the cross-section difference (ΔA). Therefore, bending can be induced in the first area A1 that is set with respect to the centre line (C) of the case 220 under the side compression condition (P).

Accordingly, the rechargeable battery 200 for applying the cap plate 32 according to the first exemplary embodiment to the case 220 according to the eleventh exemplary embodiment induces bending or folding in a predetermined direction on the first area A1 of the case 220 and the bending inducing groove 41 of the cap plate 32 extended thereto, thereby efficiently preventing the internal short circuit of the cell. FIG. 18 shows a cross-sectional view of a case applicable to a rechargeable battery according to a twelfth exemplary embodiment. In the eleventh exemplary embodiment, the case 220 includes the first area A1 with the first curvature radius R1 in the centre in the width direction and includes the second area A2 with the second curvature radius R2 on both sides of the first area A1.

The case 320 according to the twelfth exemplary embodiment has the first curvature radius R1, the minimum curvature, in correspondence to the centre line (C), and has the second curvature radius R2, the maximum curvature on both sides. The curvature radius is linearly reduced toward the centre line (C) from the both sides of the case 320 (i.e., it is gradually reduced to the first curvature radius R1 from the second curvature radius R2).

That is, the cross-section difference (ΔA, refer to FIG. 16) that is set by the curved surface (C4) (including the curved surface connecting the bottom surface 321 and the back surface 323) connecting the bottom surface 321 and the front surface 322 is linearly reduced toward the centre line (C) from both sides of the case 320.

Therefore, the case 320 has the weakest mechanical strength at the centre line (C) so it efficiently prevents the internal short circuit of the cell since it is bent or folded near the centre line (C) under the side compression condition (P).

The case 220 according to the eleventh exemplary embodiment can be bent at somewhat different positions depending on the conditions within the range of the first area A1 under the side compression condition (P), and the case 320 according to the twelfth exemplary embodiment sets the bending position more accurately since it is bent in the centre line (C) under the side compression condition (P).

Further, the case can have the first curvature radius R1 at a position that is digressed from the centre line (C), and in this instance, the bending inducing groove of the cap plate can be disposed on a straight line at the first curvature radius R1 (not shown).

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
a case (20, 220, 320);
an electrode assembly (10) in the case; and
a cap plate (32, 232, 332, 432, 532, 632, 732, 832, 932, 1032) closing the case;
wherein the case comprises a first region A1 disposed in a centre portion of the case and second regions A2 on either side of the first region, wherein the radius of curvature of the internal curved surfaces connecting the bottom (221) of the case to the front or rear walls (222, 223) of the case is greater in the second regions A2 than in the first region A1 of the case; and
the cap plate includes a groove (41, 42, 43, 44, 45, 46, 47, 48, 49, 50) formed on an inner surface of the cap plate for inducing bending of the cap plate in response to a compression force applied to sides of the case, the groove disposed in an area of the cap plate that corresponds to the position of an interface between the first and second regions A1, A2.

2. The rechargeable battery of claim 1, wherein the first region A1 is symmetrically disposed about the centre of the case.

3. The rechargeable battery of claim 1 or 2, wherein a thickness of the curved portions connecting the bottom (221) to the front and rear walls (222, 223) is greater in the second regions A2 than in the first region A1 of the case.

4. The rechargeable battery of claim 3, wherein the bottom (221) has a first thickness (t1) that is greater than a second thickness (t2) of the front or rear walls (222, 223), wherein third and fourth thicknesses (t3, t4) of the curved portions in the first and second regions of the case are gradually reduced from the bottom towards the front or rear walls.

5. The rechargeable battery of claim 4, wherein the radius of curvature of the internal curved surfaces connecting the bottom (321) of the case to the front and rear walls (322, 323) is gradually reduced towards a centre portion of the case.

6. The rechargeable battery of any one of the preceding claims, wherein the cap plate includes a terminal hole (32a) and an electrolyte injection opening (38) and the groove (41, 43, 45, 47, 49) is between the terminal hole and the electrolyte injection opening.

7. The rechargeable battery of claim 6, wherein the groove (43, 44) is longer than the diameter of the terminal hole.

8. The rechargeable battery of any one of the preceding claims, wherein the groove (43, 44) does not extend to the edges of the cap plate.

9. The rechargeable battery of any one of claims 1 to 7, wherein the groove (41, 42, 45, 46, 47, 48, 49, 50) extends across the whole width of the cap plate.

10. The rechargeable battery of any one of the preceding claims, wherein the groove defines a joining portion that joins portions of the cap plate on either side of the groove, the joining portion protruding from the top surface of the cap plate, the thickness tb of the joining portion being less than the thickness ta of the cap plate.

11. The rechargeable battery of any one of the preceding claims, wherein the groove (45, 46, 47, 48, 49, 50) is disposed at an angle with respect to the short axis of the cap plate.

12. The rechargeable battery of any one of the preceding claims, wherein the groove (47, 48, 49, 50) is bent along its length.

13. The rechargeable battery of claim 12, wherein the bent groove (47, 48, 49, 50) forms a V-shape, the apex of the V-shape pointing towards or away from a terminal hole (32a) in the cap plate.

14. The rechargeable battery of any one of the preceding claims, comprising a plurality of grooves for inducing bending of the cap plate.

15. The rechargeable battery of claim 14, comprising first and second grooves (41, 42; 43, 44; 45, 46; 47, 48; 49, 50) symmetrically disposed on either side of a terminal hole (32a) in the cap plate, the first and second grooves being disposed to respectively correspond to first and second interfaces between the first region A1 and the second regions A2 on either side.

## Patentansprüche

1. Wiederaufladbare Batterie, umfassend:
ein Gehäuse (20, 220, 320);
eine Elektrodenanordnung (10) in dem Gehäuse; und
eine das Gehäuse schließende Abdeckplatte (32, 232, 332, 432, 532, 632, 732, 832, 932, 1032);
wobei das Gehäuse einen in einem Mittelabschnitt des Gehäuses angeordneten ersten Bereich A1 sowie zweite Bereiche A2 auf beiden Seiten des ersten Bereichs umfasst, wobei der den Boden (221) des Gehäuses mit den Vorder- oder Rückwänden (222, 223) des Gehäuses verbindende Krümmungsradius der inneren gekrümmten Flächen in den zweiten Bereichen A2 größer ist als im ersten Bereich A1 des Gehäuses; und
die Abdeckplatte eine auf einer Innenfläche der Abdeckplatte ausgebildete Nut (41, 42, 43, 44, 45, 46, 47, 48, 49, 50) besitzt, um ein Biegen der Abdeckplatte als Reaktion auf eine Kompressionskraft, mit der Seiten des Gehäuses beaufschlagt werden, herbeizuführen, wobei die Nut in einem Bereich der Abdeckplatte angeordnet ist, der der Position einer Übergangsfläche zwischen den ersten und zweiten Bereichen A1, A2 entspricht.

2. Wiederaufladbare Batterie nach Anspruch 1, wobei der erste Bereich A1 symmetrisch um den Mittelpunkt des Gehäuses angeordnet ist.

3. Wiederaufladbare Batterie nach Anspruch 1 oder 2, wobei eine Dicke der den Boden (221) mit den Vorder- und Rückwänden (222, 223) verbindenden gekrümmten Abschnitte in den zweiten Bereichen A2 größer ist als in dem ersten Bereich A1 des Gehäuses.

4. Wiederaufladbare Batterie nach Anspruch 3, wobei der Boden (221) eine erste Dicke (t1) aufweist, die größer ist als eine zweite Dicke (t2) der Vorder- oder Rückwände (222, 223), wobei dritte und vierte Dicken (t3, t4) der gekrümmten Abschnitte in den ersten und zweiten Bereichen des Gehäuses sich vom Boden zu den Vorder- oder Rückwänden hin stufenweise verringern.

5. Wiederaufladbare Batterie nach Anspruch 4, wobei der Krümmungsradius der den Boden (321) des Gehäuses mit den Vorder- und Rückwänden (322, 323) verbindenden inneren gekrümmten Flächen sich stufenweise zu einem Mittelabschnitt des Gehäuses hin verringert.

6. Wiederaufladbare Batterie nach einem der vorstehenden Ansprüche, wobei die Abdeckplatte ein Anschlussklemmenloch (32a) sowie eine Elektrolyteinspritzöffnung (38) aufweist, und die Nut (41, 43, 45, 47, 49) sich zwischen dem Anschlussklemmenloch und der Elektrolyteinspritzöffnung befindet.

7. Wiederaufladbare Batterie nach Anspruch 6, wobei die Nut (43, 44) länger als der Durchmesser des Anschlussklemmenlochs ist.

8. Wiederaufladbare Batterie nach einem der vorstehenden Ansprüche, wobei sich die Nut (43, 44) nicht bis zu den Rändern der Abdeckplatte erstreckt.

9. Wiederaufladbare Batterie nach einem der Ansprüche 1 bis 7, wobei sich die Nut (41, 42, 45, 46, 47, 48, 49, 50) über die gesamte Breite der Abdeckplatte erstreckt.

10. Wiederaufladbare Batterie nach einem der vorstehenden Ansprüche, wobei die Nut einen Verbindungsabschnitt definiert, der Abschnitte der Abdeckplatte auf beiden Seiten der Nut verbindet, wobei der Verbindungsabschnitt von der oberen Fläche der Abdeckplatte vorsteht, wobei die Dicke tb des Verbindungsabschnitts kleiner ist als die Dicke ta der Abdeckplatte.

11. Wiederaufladbare Batterie nach einem der vorstehenden Ansprüche, wobei die Nut (45, 46, 47, 48, 49, 50) in einem Winkel bezüglich der kurzen Achse der Abdeckplatte angeordnet ist.

12. Wiederaufladbare Batterie nach einem der vorstehenden Ansprüche, wobei die Nut (47, 48, 49, 50) entlang ihrer Länge gebogen ist.

13. Wiederaufladbare Batterie nach Anspruch 12, wobei die gebogenen Nut (47, 48, 49, 50) eine V-Form ausbildet, wobei die Spitze der V-Form einem Anschlussklemmenloch (32a) in der Abdeckplatte zugewandt oder von diesem abgewandt ist.

14. Wiederaufladbare Batterie nach einem der vorstehenden Ansprüche, umfassend eine Vielzahl von Nuten zum Herbeiführen eines Biegens der Abdeckplatte.

15. Wiederaufladbare Batterie nach Anspruch 14, umfassend erste und zweite Nuten (41, 42; 43, 44; 45, 46; 47, 48; 49, 50), die symmetrisch auf beiden Seiten eines Anschlussklemmenlochs (32a) in der Abdeckplatte angeordnet sind, wobei die ersten und zweiten Nuten so angeordnet sind, dass sie jeweils ersten und zweiten Übergangsflächen zwischen dem ersten Bereich A1 und den zweiten Bereichen A2 auf beiden Seiten entsprechen.

## Revendications

1. Batterie rechargeable comprenant :
un boîtier (20, 220, 320) ;
un ensemble d'électrode (10) dans le boîtier ; et
une plaque formant capuchon (32, 232, 332, 432, 532, 632, 732, 832, 932, 1032) formant le boîtier ;
dans laquelle le boîtier comprend une première région A1 disposée dans une partie centrale du boîtier et des secondes régions A2 de chaque côté de la première région, dans laquelle le rayon de courbure des surfaces incurvées internes raccordant le fond (221) du boîtier aux parois avant ou arrière (222, 223) du boîtier est plus grand dans des secondes régions A2 que dans la première région A1 du boîtier ; et
la plaque formant capuchon comprend une rainure (41, 42, 43, 44, 45, 46, 47, 48, 49, 50) formée sur une surface interne de la plaque formant capuchon induisant le cintrage de la plaque formant capuchon en réponse à une force de compression appliquée sur les côtés du boîtier, la rainure étant disposée dans la zone de la plaque formant capuchon qui correspond à la position d'une interface entre les première et secondes régions A1, A2.

2. Batterie rechargeable selon la revendication 1, dans laquelle la première région A1 est symétriquement disposée autour du centre du boîtier.

3. Batterie rechargeable selon la revendication 1 ou 2, dans laquelle une épaisseur des parties incurvées raccordant le fond (221) aux parois avant et arrière (222, 223) est plus importante dans les secondes régions A2 que dans la première région A1 du boîtier.

4. Batterie rechargeable selon la revendication 3, dans laquelle le fond (221) a une première épaisseur (t1) qui est supérieure à une deuxième épaisseur (t2) des parois avant ou arrière (222, 223), dans laquelle des troisième et quatrième épaisseurs (t3, t4) des parties incurvées dans les première et secondes régions du boîtier sont progressivement réduites du fond vers les parois avant ou arrière.

5. Batterie rechargeable selon la revendication 4, dans laquelle le rayon de courbure des surfaces incurvées internes raccordant le fond (321) du boîtier aux parois avant et arrière (322, 323) est progressivement réduit vers une partie centrale du boîtier.

6. Batterie rechargeable selon l'une quelconque des revendications précédentes, dans laquelle la plaque formant capuchon comprend un trou de borne (32a) et une ouverture d'injection d'électrolyte (38) et la rainure (41, 43, 45, 47, 49) est entre le trou de borne et l'ouverture d'injection d'électrolyte.

7. Batterie rechargeable selon la revendication 6, dans laquelle la rainure (43, 44) est plus longue que le diamètre du trou de borne.

8. Batterie rechargeable selon l'une quelconque des revendications précédentes, dans laquelle la rainure (43, 44) ne s'étend pas vers les bords de la plaque formant capuchon.

9. Batterie rechargeable selon l'une quelconque des revendications 1 à 7, dans laquelle la rainure (41, 42, 45, 46, 47, 48, 49, 50) s'étend sur toute la largeur de la plaque formant capuchon.

10. Batterie rechargeable selon l'une quelconque des revendications précédentes, dans laquelle la rainure définit une partie d'assemblage qui assemble des parties de la plaque formant capuchon sur chaque côté de la rainure, la partie d'assemblage faisant saillie de la surface supérieure de la plaque formant capuchon, l'épaisseur tb de la partie d'assemblage étant inférieure à l'épaisseur ta de la plaque formant capuchon.

11. Batterie rechargeable selon l'une quelconque des revendications précédentes, dans laquelle la rainure (45, 46, 47, 48, 49, 50) est disposée à un angle par rapport à l'axe court de la plaque formant capuchon.

12. Batterie rechargeable selon l'une quelconque des revendications précédentes, dans laquelle la rainure (47, 48, 49, 50) est cintrée le long de sa longueur.

13. Batterie rechargeable selon la revendication 12, dans laquelle la rainure (47, 48, 49, 50) cintrée forme une forme de V, le sommet de la forme de V pointant vers ou à distance d'un trou de borne (32a) de la plaque formant capuchon.

14. Batterie rechargeable selon l'une quelconque des revendications précédentes, comprenant une pluralité de rainures pour induire le cintrage de la plaque formant capuchon.

15. Batterie rechargeable selon la revendication 14, comprenant des première et seconde rainures (41, 42 ; 43, 44 ; 45, 46 ; 47, 48 ; 49, 50) disposées de manière symétrique de chaque côté d'un trou de borne (32a) dans la plaque formant capuchon, les première et seconde rainures étant disposées pour correspondre respectivement aux première et seconde interfaces entre la première région A1 et les secondes régions A2 de chaque côté.
